Europäisches Patentamt

European Patent Office

Office européen des brevets

(11) Veröffentlichungsnummer: **0 241 872**
A1

## (12) EUROPÄISCHE PATENTANMELDUNG

(21) Anmeldenummer: 87105316.1

(22) Anmeldetag: **10.04.87**

(51) Int. Cl.⁴: **B 60 T 10/02,** B 60 T 7/12, B 60 T 1/08

(30) Priorität: **18.04.86 HU 163286**

(43) Veröffentlichungstag der Anmeldung: **21.10.87**
**Patentblatt 87/43**

(84) Benannte Vertragsstaaten: **AT DE FR GB**

(71) Anmelder: **Csepel Autogyár, Pf. 38,
H-2311 Szigetszentmiklos (HU)**

(72) Erfinder: **Simonyi, Sandor, Dr., Salgotarjan, Baglyasalja,
Petöfi u.59, 3102 (HU)**
Erfinder: **Töröcsik, Laszlo, Budapest XII, Kakukk
u.10b, 1126 (HU)**
Erfinder: **Valoczi, György, Salgotarjan, Budapesti
ut 40, 3104 (HU)**
Erfinder: **Toth, Istvan, Salgotarjan, Kistarjan
ut 8, 3100 (HU)**

(74) Vertreter: **Patentanwälte Viering & Jentschura,
Steinsdorfstrasse 6, D-8000 München 22 (DE)**

(54) Verfahren und Einrichtung zur Betätigung der hydrodynamischen Verzögerungsbremse von Kraftfahrzeugen.

(57) Kraftfahrzeugen, deren Antriebskette aus einer Brennkraftmaschine (13), einem daran über eine Kupplung (14) angeschlossenen Getriebe (15), mindestens einem daran unmittelbar oder gegebenenfalls über eine Kardanwelle (16) angeschlossenen Differentialwerk (17), mindestens einem daran angeschlossenen Halbwellenpaar (18) und einem daran angeschlossenen Radpaar (19) besteht, wird aus der Winkelgeschwindigkeit des mit der Antriebswelle des Getriebes (15) beginnenden und mit den Rädern (19) endenden Teils der Antriebskette vom Signalgeber (1) ein elektrisches Signal gebildet, mit Hilfe der Veränderung des Signals infolge der plötzlichen Verminderung der Winkelgeschwindigkeit des Rades (19) das Steuersignal des elektrohydraulischen Ventilsystems (5) der hydrodynamischen Verzögerungsbremse (6) mit einer elektronischen Steuereinheit (2) verändert und mit dem elektrohydraulischen Ventilsystem (2) die hydrodynamische Verzögerungsbremse (6) der blockierungsfreien Verzögerung entsprechend eingestellt.

Zur blockierungsfreien Betätigung an den angetriebenen Rädern (19) sind vorteilhaft an der Antriebswelle des Getriebes (15) ein die Winkelgeschwindigkeit messender Signalgeber (1), zur automatischen Einschaltung an der Brennkraftmaschine (13) ein Motordrehzahlsignalgeber (7), am Gaspedal (21) ein Gaspedalgrundstellungs-Signalgeber (9), und zum zu der Bremskraft proportionalen Bremsen im Bremssystem (24) ein die Bremskraft wahrnehmender Signalgeber (11) eingebaut.

## Verfahren und Einrichtung zur Betätigung der hydrodynamischen Verzögerungsbremse von Kraftfahrzeugen

Die Erfindung betrifft ein Verfahren und eine Einrichtung, durch welche die elektrohydraulisch gesteuerte hydrodynamische Verzögerungsbremse von Strassenfahrzeugen beeinflußt (gesteuert) wird.

Zum Einschalten und Regeln von hydrodynamischen Verzögerungsbremsen sind verschiedene Lösungen bekannt.

Die einfachste Lösung ist in der US-A 4276970 bekanntgemacht, bei welcher die hydrodynamische Verzögerungsbremse vom Kraftfahrer über ein Bremspedal derart eingeschaltet wird, daß das Ventil des Druckzweiges geöffnet wird und die Regelung durch das im Ausflußzweig eingebaute Drosselventil erfolgt, wodurch der Druck des Ausflußzweiges zu der Bewegung des Bremspedals proportional verändert wird.

Die Lösung laut US-A 4421213 gewährleistet eine sensiblere Regelung, wobei im Druckzweig der hydrodynamischen Verzögerungsbremse nicht ein Zweiwegeventil zum Öffnen oder Schließen sondern ein zu der Bremskraft proportional umschaltendes Dreiwegeventil eingebaut ist, durch welches die Hydraulikflüssigkeit entweder unmittelbar oder nach einer Drosselung zur hydrodynamischen Verzögerungsbremse durchgelassen wird. Die stufenlose Regelung erfolgt auf mit der obenerwähnten Lösung gleiche Weise.

Bei dem automatischen Getriebe Typ 4HP 500 der deutschen Firma Zahnradfabrik-Friedrichshafen kann die Einschaltung der hydrodynamischen Verzögerungsbremse als einzigartig betrachtet werden, weil am Druckzweig zwecks rascher Einschaltung auch ein hydropneumatischer Akkumulator angeschlossen ist, mit welchem das Auffüllen der hydrodynamischen Verzögerungsbremse beschleunigt wird.

Bei dem automatischen Getriebe Typ Doromat 873A der deutschen Firma Zahnräderfabrik Renk AG wird die Rolle der hydrodynamischen Verzögerungsbemse durch ein doppeltes hydrodynamisches Rotationswechselgetriebe erfüllt. Die Regelung der Bremswirkung ist wie folgt:

Mit Wegnahme des Gases entsteht ein Schubbetrieb, der die konstante Bremskraft dadurch gewährleistet, daß das automatische Getriebe mit der Verminderung der Fahrzeuggeschwindigkeit fortlaufend in eine niedrigere Stellung schaltet, wodurch das Moment des hydrodynamischen Wechselgetriebes konstant bleibt. Die Feinregelung erfolgt auch hier mit Hilfe des Bremspedals.

Der gemeinsame Nachteil der bekannten Systeme besteht darin, daß die hydrodynamische Verzögerungsbremse allein die angetriebenen Räder insbesondere bei ungünstigen Straßenverhältnissen blockieren kann bzw. die Räder ins Schleudern geraten können.

Zielsetzung der Erfindung ist es, eine Regelung der Bremswirkung der hydrodynamischen Verzögerungsbremse zu entwickeln, durch welche das Schleudern der Räder im Betriebsbereich der hydrodynamischen Verzögerungsbremse verhindert und dabei auch die Bremswirkung der Betriebsbremse in Betracht gezogen wird. Im Sinne der Erfindung haben wir die Aufgabe derart gelöst, daß die Winkelgeschwindigkeit der angetriebenen Räder den blockierungsverhindernden Systemen ähnlich fortlaufend bewertet und die hydrodynamische Verzögerungsbremse mit dem derart gebildeten Signal geregelt wird.

Die Erfindung betrifft also ein Verfahren zur blockierungsfreien Betätigung der mittels eines elektrohydraulischen Ventilsystems geregelten hydrodynamischen Verzögerungsbremse bei Kraftfahrzeugen, deren Antriebskette aus einer Brennkraftmaschine, einem daran über eine Kupplung angeschlossenen Getriebe, mindestens einem daran unmittelbar oder gegebenenfalls über eine Kardanwelle angeschlossenen Differentialwerk, mindestens einem daran angeschlossenen Halbwellenpaar und einem daran angeschlossenen Radpaar besteht. Während des Verfahrens werden aus der Winkelgeschwindigkeit jedwelchen Konstruktionsteiles bzw. Konstruktionsteilpaares des mit der Antriebswelle des Getriebes beginnenden und mit den Rädern endenden Teiles der Antriebeskette ein elektrisches Signal mittels eines die Winkelgeschwindigkeit messenden Signalgebers gebildet und das Steuersignal des elektrohydraulischen Ventilsystems der hydro-

*dynamischen Verzögerungsbremse durch eine elektronische Steuereinheit bei plötzlicher Veränderung des Signals infolge einer plötzlich auftretenden Verminderung der Winkelgeschwindigkeit des Rades verändert und die hydodynamische Verzögerungsbremse mit dem elektrohydraulischen Ventilsystem der blockierungsfreien Verzögerung entsprechend eingestellt.*

*Die Erfindung betrifft auch eine Einrichtung zur blockierungsfreien Betätigung der mittels eines elektrohydraulischen Ventilsystems geregelten hydrodynamischen Verzögerungsbremse, insbesondere nach dem Verfahren nach Anspruch 1, bei Kraftfaharzeugen , deren Antriebskette aus einer Brennkraftmaschine, einem daran über eine Kupplung angeschlossenen Getriebe, mindestens einem daran unmittelbar oder gegebenenfalls über eine Kardanwelle angeschlossenen Differentialwerk, mindestens einem daran angeschlosssenen Halbwellenpaar und einem daran angeshlossenen Radpaar besteht. Die Einrichtung ist derart ausgebildet, daß irgendein Konstruktionsteil oder irgendein Konstruktionteilpaar des mit der Antriebswelle des Getriebes beginnenden und mit dem Rad endenden Teiles der Antriebskette einen die Winkelgeschwindigkeit messenden Signalgeber aufweist, dessen Ausgang an einer elektronischen Steuereinheit angeschlossen ist. Die elektronische Steuereinheit besteht aus mindestens einer die Winkelgeschwindikeitsveränderung bewertenden Untereinheit und einer damit in Regelungsverbindung stehenden, ein Steuersignal erzeugenden Untereinheit. Der Ausgang der elektonischen Steuereinheit ist mit den elektrischen Regelungsarmaturen des elektrohydraulischen Ventilsystems verbunden.*

*Die Erfindung bezieht sich ferner auf eine Einrichtung zum automatischen Einschalten der mittels eines elektrohydraulischen Ventilsystems geregelten hydrodynamischen Verzögerungsbremse bei Kraftfahrzeugen, die eine Brennkraftmaschine und ein Gaspedal aufweisen, welche Einrichtung das den Motor mit Kraftstoff speisende Gaszufuhrsystem regelt. Die Einrichtung ist derart ausgebildet, daß das Gaszufuhrsystem mit einem Gaspedalgrundstellungs-Signalgeber und der Motor mit einem Motorumdrehungs-Signalgeber versehen, die am Eingang einer elektronischen Steuereinheit angeschlossen sind. Die elektronische Steuereinheit besteht mindestens aus einer ein Drehzahlgrenzwertsignal erzeugenden Untereinheit, einer daran angeschlossenen, aus dem gleichzeitigen Auftreten des Drehzahlgrenzwertsignals und des Gaspedalgrundstellungssignals die Verzögerung bewertenden Untereinheit und aus einer mit der erwähnten, die Verzögerung bewertenden Untereinheit in Regelungsverbindung stehenden, ein*

Steuersignal erzeugenden Untereinheit.

Der Ausgang der elektronischen Steuereinheit ist mit den elektrischen Regelungsarmaturen des die hydrodynamische Verzögerungsbremse regelnden elektrohydraulischen Ventilsystems verbunden.

Die Erfindung bezieht sich ferner auf eine Einrichtung zur Betätigung der mittels eines elektrohydraulischen Ventilsystems geregelten hydrodynamischen Verzögerungsbremse mit dem Betriebsbremssystem gemeinsam bei Kraftfahrzeugen, deren Betriebsbremssystem aus dem Bremspedal, den auf die Räder einwirkenden Bremskonstruktionen und das Bremspedal mit den Bremskonstruktionen verbindender Pedalkraftübertragungskonstruktion besteht. Die Einrichtung ist derart ausgebildet, daß im Betriebssystem ein die Bremskraft abfühlender Signalgeber eingebaut ist, der mit einem elektrischen Signalumformer verbunden ist, dessen Ausang mit den elektrischen Regelungsarmaturen des elektrohydraulischen Ventilsystems verbunden ist.

Bei einer bevorzugten Ausführungsform der erfindungsgemäßen Einrichtung sind die die blockierungsfreie Betätigung und die automatische Einschaltung der hydrodynamischen Verzögerungsbremse regelnden Untereinheiten in der elektrischen Steuereinheit gemeinsam eingebaut.

Die Erfindung wird nachstehend anhand eines Ausführungsbeispieles mit Hilfe der beiliegenden Zeichnungen näher erläutert. Es zeigen:

Fig. 1 - die Skizze des Antriebs, des Bremsystems und des Gaszuführsystems eines beispielsweisen Kraftfahrzeuges,

Fig. 2 - die Skizze der gemeinsamen Verwendung der erfindungsgemäßen Einrichtungen

Fig. 3 - die Skizze der die Blockierung der hydrodynamischen Verzögerungsbremse verhindernden Einrichtung,

Fig. 4 - die Skizze der die hydrodynamische Verzögerungsbremse automatisch einschaltenden Einrichtung,

Fig. 5 - die Skizze der die hydrodynamische Verzögerungsbremse mit der Betriebsbremse gemeinsam betätigenden Einrichtung, und

Fig. 6 - die Skizze der elektronischen Steuereinheit.

Die dargestellte erfindungsgemäße Einrichtung wurde zur Steuerung der hydrodynamischen Verzögerungsbremse eines Autobusses für Stadtverkehr entwickelt.

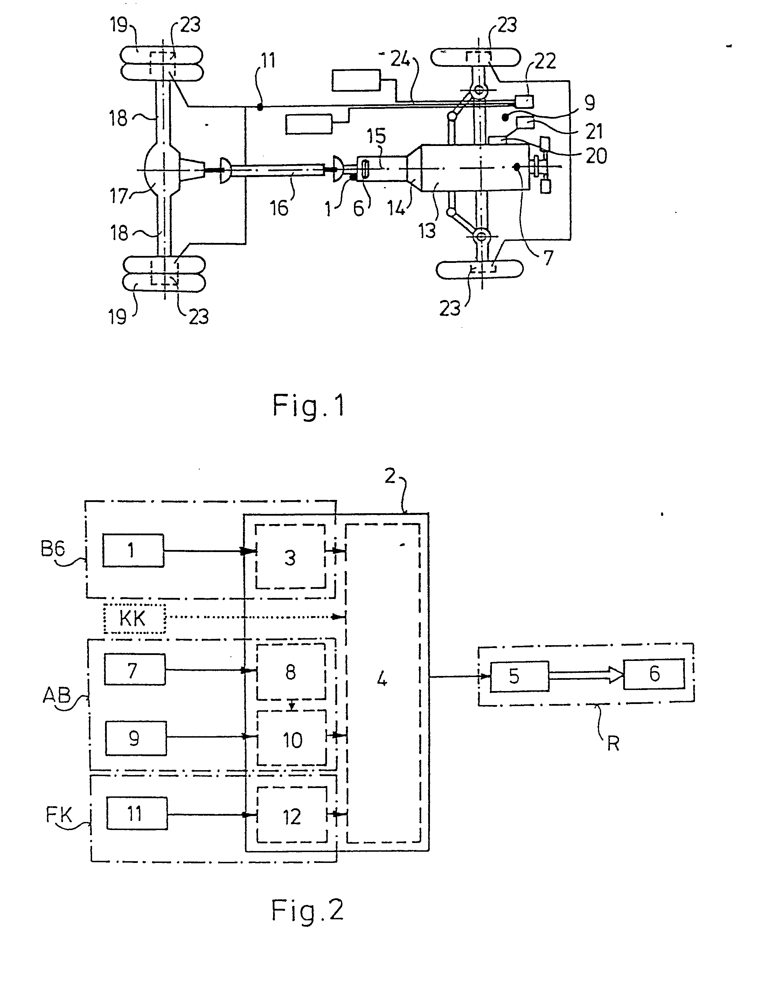

Der Autobus wird, wie aus Fig. 1 ersichtlich, von einem sechs-Zylinder-Diesel-Verbrennungsmotor 13 angetrieben. Am Verbrennungsmotor 13 ist über eine Kupplung 14 ein Getriebe 15 angeschlossen, in welchem eine hydrodynamische Verzögerungsbremse 6 mit dem in Fig. 1 nicht dargestellten elektrohydraulischen Ventilsystem gemeinsam eingebaut ist. Die Ausgangswelle des Getriebes 15 ist über eine Kardanwelle 16 mit einem Differentialwerk 17 der Hinterachsbrücke verbunden, über welches die Räder 19 von Halbwellen 18 angetrieben werden. Die Antriebskette des Autobusses wird von diesen mechanischen Einheiten gebildet.

Hier soll bemerkt werden, daß die erfindungsgemäßen Einrichtungen auch bei Personenkraftwagen verwendet werden können. Wie bekannt, sind bei Personenkraftwagen sowohl mit Frontantrieb als auch mit Heckmotor das Getriebe und das Differentialwerk zusammengebaut, in deren Antriebskette befindet sich also keine Kardanwelle.

Aus Fig. 1 ist auch ersichtlich, daß das Bremssystem des Autobusses ein Zweikreis-Luftbremssystem aufweist, das aus Bremspedal 22, aus in den Rändern angeordneten Bremskonstruktionen 23 und aus einer diese verbindenden Pedalkraftübertragungskonstsruktion 24 besteht. Die erwähnte Pedalkraftübertragungskonstruktion 24 besteht in unserem Fall aus nicht näher bezeichneten Rohrleitungen, Ventilen, Luftbehältern und einem diese mit Druckluft versorgenden Kompressor.

Die Kraftstoffversorgung des Verbrennungsmoktors 13 ist, wie aus Fig. 1 ersichtlich, durch ein Gaszufuhrsystem 20 sichergestellt, das mit einem Gaspedal 21 betätigbar ist.

*Die Betätigung der hydrodynamischen Verzögerungsbremse 6 erfolgt, wie aus Figuren 2-5 ersichtlich , über ein elektrohydraulisches Ventilsystem 5, wobei das eine Ventil ein Proportionalventil ist. Die hydrodynamische Verzögerungsbremse 6 und das elektrohydraulische Ventilsystem 5 bilden gemeinsam eine gesteuerte Konstruktionseinheit R.*

*Die zur Steuerung erforderlichen Informationen werden mit entsprechenden Signalgebern erzeugt.*

*Die wichtigste Information ist die Veränderung der Geschwindigkeit des Kraftfahrzeuges, genauer gesagt der Winkelgeschwindigkeit (Drehzahl) der Räder. Üblicherweise wird das bei herkömmlichen blockierungsverhindernden Systemen mit bei den Rädern angeordneten, die Winkelgeschwindigkeit messenden Signalgebern gelöst. Wenn das Kraftfahrzeug mit einem derartigen blockierungsverhindernden System versehen ist, können diese Signalgeber auch bei der erfindungsgemäßen Steuerung verwendet werden. Die Aufgabe kann aber auch mit wenigeren Signalgebern gelöst werden. Da die hydrodynamische Verzögerungsbremse nur auf die angetriebenen Räder einwirkt, verursacht das Durchrutschen irgendeines dieser Räder auch in der Winkelgeschwindigkeit der Kardanwelle eine unmittelbare Veränderung. Derart genügt es, nur einen, die Winkelgeschwindigkeit messenden Signalgeber entweder bei der Kardanwelle, oder bei der Antriebswelle des Getriebes anzuordnen.*

*Dementsprechend wurde der die Winkelgeschwindigkeit messende Signalgeber 1 der hinsichtlich seiner Ausbildung ein photoelektrischer Impulsgeber ist, am Ausgang des Kilometer-Gebers des Getriebes 15 eingebaut.*

*Damit die hydrodynamische Verzögerungsbremse in verschiedenen Verkehrslagen entsprechend betätigt werden kann, sind zu deren Steuerung auch weitere Informationen nötig, welche von den folgenden Gebern erzeugt werden.*

*Der Motordrehzahl-Signalgeber 7 ist an der Welle des Lenkantriebes des Verbrennungsmotors 13 eingebaut, welcher ebenfalls ein photoelektrischer Impulsgeber ist.*

*Der Gaspedalgrundstellungs-Signalgeber 9 ist am Gaspedal 21 eingebaut, wel-*

hinsichtlich seiner Ausbildung ein induktiver metallempfindlicher Lagesensor ist. Wenn das Gaspedal ursprünglich einen elektronischen Ferngeber betätigt, ist kein gesonderter Gaspedalgrundstellungs-Signalgeber erforderlich, weil das O-Signalniveau des Gasferngebers dem Signal der Grundstellung entspricht.

Schließlich ist der die Bremskraft wahrnehmende Signalgeber 11 im Bremssystem an einer Stelle eingebaut, wo der Luftdruck sich zu der Bremskraft proportional verändert. In unserem Fall ist der die Bremskraft wahrnehmende Signalgeber 11 ein durch Luftdruck betätigter induktiver Geber, der ein Signal mit zu dem Druck proportionaler Frequenz erzeugt. Bei der verwirklichten Ausführungsform ist der die Bremskraft wahrnehmende Signalgeber 11 in der Rohrleitung des hinteren Bremskreises der Pedalkraftübertragungskonstruktion 24 eingebaut. Das Ziel würde aber auch mit einem zu der Bewegung des Bremspedals proportional funktionierenden Signalgeber erreicht. Der Druckfühler wird derart eingestellt, daß dieser ein Signal auch bei einem um 0,1 - 0,2 MPa niedrigeren Druck als der zum tatsächlichen Bremsen nötige Druck erzeugt.

Die Anordnung der einzelnen Signalgeber ist in Fig. 1 dargestellt.

Die erfindungsgemäßen Einrichtungen sind folgenderweise aufgebaut.

Der die Winkelgeschwindigkeit messende Signalgeber 1 ist am Eingang der die Winkelgeschwindigkeitsänderung bewertenden Untereinheit 3 der elektronischen Steuereinheit 2, der Motordrehzahlsignalgeber 7 am Eingang der den Drehzahlgrenzwert erzeugenden Untereinheit 8 der elektronischen Steuereinheit 2, der Gaspedalgrundstellungs-Signalgeber 9 am Eingang der die Verzögerung bewertenden Untereinheit 10 der elektronischen Steuereinheit 2, und der die Bremskraft wahrnehmende Signalgeber 11 am Eingang des Signalumformers 12 der elektronischen Steuereinheit 2 angeschlossen.

In der elektronischen Steuereinheit 2 sind die die Winkelgeschwindigkeitsänderrung bewertende Untereinheit 3, die die Verzögerung bewertende Untereinheit 10 und der Signalumformer 12 mit einer ein Steuersignal erzeugenden Untereinheit 4 verbunden, deren Ausgang mit dem elektrohydraulischen Ventilsystem 5 verbunden ist. Die das Drehzahlgrenzwertsignal erzeugende Untereinheit 8 ist mit der die Verzögerung bewertenden Untereinheit 10 verbunden.

*Der oben beschriebene Aufbau ist in Fig. 2 dargestellt.*

*Da die einzelnen Einrichtungen auch voneinander unabhängig aufgebaut werden können, beschreiben wir diese auch gesondert.*

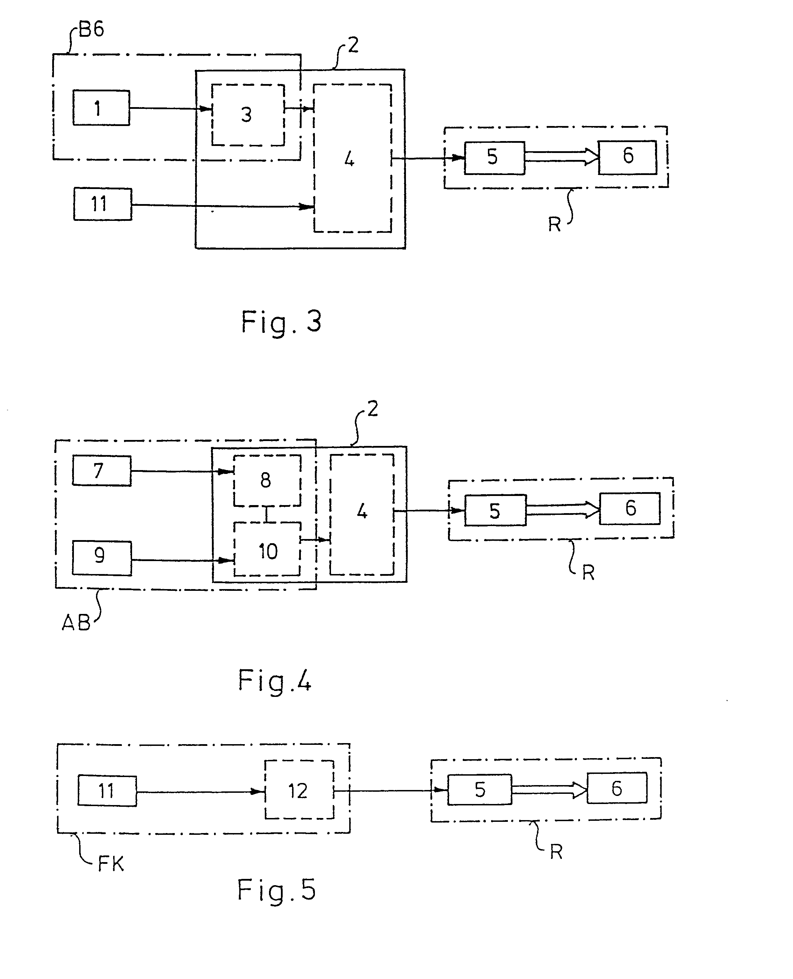

*Laut Fig. 3 ist der die Winkelgeschwindigkeit messende Signalgeber 1 mit dem Signalgeber 1 mit dem Eingang der die Winkelgeschwindigkeitsänderung bewertenden Untereinheit 3 der elektronischen Steuereinheit 2 und der Ausgang der ein Steuersignal erzeugenden Untereinheit 4 der elektronischen Steuereinheit 2 mit dem elektrohydraulischen Ventilsystem 5 verbunden. Der die Winkelgeschwindigkeit messende Signalgeber 1 und die die Winkelgeschwindigkeitsänderung messende Untereinheit 3 bilden die Steuereinheit der blockierungsverhindernden Einrichtung BG. In Fig. 3 haben wir zwecks Darstellung einer betriebsfähigen Einrichtung zur Einschaltung der hydrodynamischen Verzögerungsbremse 6 auch einen die Bremskraft wahrnehmenden Signalgeber 11 bezeichnet.*

*In Fig. 4 ist eine Einrichtung dargestellt, bei der der Motordrehzahlsignalgeber 7 mit dem Eingang der das Drehzahlgrenzwertsignal erzeugenden Einheit 8 der elektonischen Steuereinheit 2, der Gaspedalgrundstellungs-Signalgeber 9 mit dem Eingang der die Verzögerung bewertenden Untereinheit 10 der elektronischen Steuereinheit 2, und der Ausgang der ein Steuersignal erzeugenden Untereinheit 4 der elektronischen Steuereinheit 2 mit dem elektronischen Ventilsystem 5 verbunden sind. Der Motordrehzahlsignalgeber 7, der Gaspedalgrundstellungs-Signalgeber 9, die das Drehzahlgrenzwertsignal erzeugende Untereinheit 8 und die damit verbundene, die Verzögerung bewertende Untereinheit 10 bilden die Steuereinheit der automatischen Einschaltungsvorrichtung AB.*

*In Fig. 5 ist derjenige einfachste Fall dargestellt, bei dem die hydrodynamische Verzögerungsbremse 6 mit dem Bremspedal eingeschaltet werden kann. Der die Bremskraft wahrnehmende Signalgeber 11 ist über den Signalumformer 12 unmittelbar mit dem elektrohydraulischen Ventilsystem 5 verbunden. Von dem die Bremskraft wahrnehmenden Signalgeber 11 und dem Signalumformer 12 wird die über das Bremspedal betätigte Einschaltvorrichtung FK gebildet.*

0241872

Da es derartige Kraftfahrzeuge gibt, wo die Einschaltung und Regelung der hydrodynamischen Verzögerungsbremse durch Handbetätigung erfolgt, ist in Fig. 2 auch ein Handschalter KK dargestellt. Damit wollen wir aber nur die Möglichkeit klarstellen; bei der in Fig. 2 dargestellten vollständigen Einrichtung ist dieser Handschalter nicht erforderlich.

Die elektronische Steuereinheit kann in Kenntnis ihrer später zu beschreibenden Aufgaben in zahlreichen Varianten zusammengestellt werden.

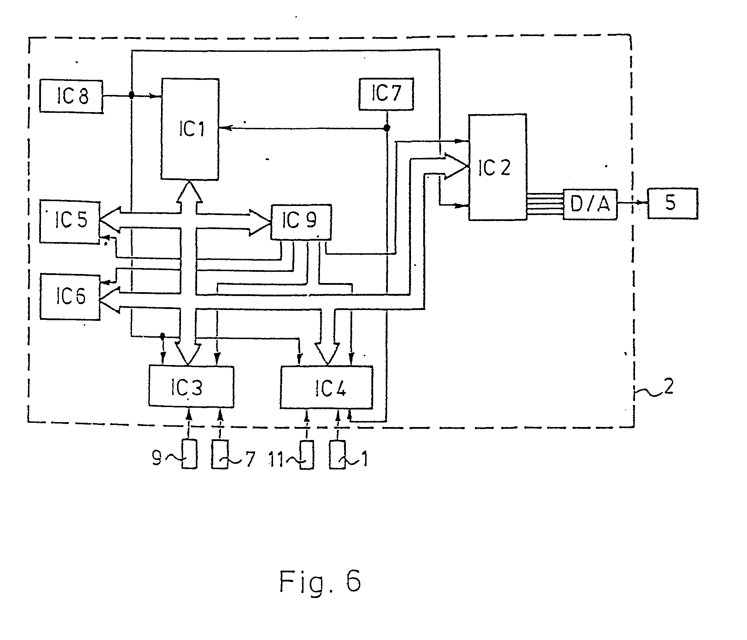

In Fig. 6 ist eine mögliche Variante dargestellt. Die elektronischen Elemente sind mit den bekannten Identifikationsnummern laut der IC-Kataloge bezeichnet.

Die in Fig. 6 dargestellte elektronische Steuereinheit 2 besteht aus dem Mikroprozessor ICl/Z80A/, der programmierbaren input/output Einheit IC2 / 8255/, der programmierbaren Dreikanalzähler- und -zeitgebereinheit IC3 und IC4 /8253/, der RAM Einheit IC5 /4016/, der ROM Einheit IC6 /2732/, dem Taktgenerator IC7 /7434/, der Reset-Einheit IC8 /74LS132/, der Dekoder-Einheit IC9 /741S138/ und dem Digital/Analog-Wandler D/A.

Die Adressen-, Daten- und Steueranschlußpunkte gleicher Funktion des Mikroprozessors ICl, der programmierbaren Eingangs/Ausgangseinheit IC2, der programmierbaren Dreikanalzähler- und -zeitgebereinheit IC3 und IC4, der RAM Einheit IC5, der ROM Einheit IC6 und der Dekodereinheit IC9 sind miteinander verbunden.

Die Reset-Einheit IC8 ist mit dem "Reset"-Punkt der programmierbaren Eingangs/Ausgangseinheit IC2 des Mikroprozessors ICl und der programmierbaren Dreikanalzähler- und -zeitgebereinheit IC3 und IC4 verbunden.

Die Ausgände der Dekodereinheit IC9 sind einzeln mit den chip-select-Eingängen der programmierbaren Eingangs/Ausgangseinheit IC2, der programmierbaren Dreikananlzähler- und -zeitgebereinheit IC3 und IC4, der RAM Einheit IC5 und der ROM Einheit IC6 verbunden.

Der Taktgenerator IC7 ist mit den Takteingängen des Mikroprozessors ICl und der programmierbaren Dreikanalzähler- und -zeitgebereinheit IC3 und IC4 verbunden.

*Mit den Ausgängen der programmierbaren Eingangs/Ausgangseinheit IC2 sind die Eingänge des Digital/Analog-Wandlers D/A verbunden.*

*Die elektronische Steuereinheit 2 ist über die Ausgänge des Digital/Analog – Wandlers D/A mit dem elektrohydraulischen Ventilsystem 5 verbunden. Der Digital/Analog-Wandler D/A erzeugt ein Spannungssignal von 0 – 10 V, welches die eigene Steuerelektronik des proportionalen Ventils des elektrohydraulischen Ventilsystems 5 derart regelt, daß diese das proportionale Ventil im Druckbereich von 0 – 1 MPa regelt.*

*Der die Winkelgeschwindigkeit messende Signalgeber und der die Bremskraft wahrnehmende Signalgeber 11 sind an den Eingängen der programmierbaren Dreikanalzähler- und -zeitgebereinheit IC4, und der Motordrehzahlsignalgeber 7 und der Gaspedalgrundstellungs-Signalgeber 9 sind an den Eingängen der programmierbaren Dreikanalzähler- und -zeitgebereinheit angeschlossen.*

*Wie es beim Vergleich der Figuren 2 und 6 ersichtlich ist, können die funktionell getrennten Untereinheiten der Steuerelektronik nach Fig. 2 mit den elektronischen Einheiten nach Fig. 6 nicht genau identifiziert werden. Die Erklärung dazu liegt darin, daß die Steuerelektronik mit den auf einzelne Aufgaben spezialisierten elektronischen Elementen einfacher als die Zertrennung laut Untereinheiten aufgebaut werden kann. Diese Elemente können sogar teilweise oder im Ganzen auch als eine einzige elektronische Einheit ausgebildet werden.*

*Das erfindungsgemäße Verfahren, das beispielsweise mit der vorangehend beschriebenen Einrichtung realisierbar ist, ist wie folgt:*

*Wenn der Fahrzeugfahrer das Bremsen mit dem Bremspedal 22 beginnt, gibt der die Bremskraft wahrnehmende Signalgeber 11 ein dem Bremswillen des Fahrzeugfahrers entsprechend großes Signal an den Signalumformer 12.*

*Die elektronische Steuereinheit 2 bewertet dieses Signal und gibt durch die ein Steuersignal erzeugende Untereinheit 4 eine Steuersignal an das elektrohydraulische Ventilsystem 5, wodurch die hydrodynamische Verzögerungsbremse 6 eingeschaltet und das Bremsmoment zu der Bremskraft proportional stufenlos*

erhöht wird.

Wenn irgendein angetriebenes Rad 19 aus irgendeinem Grund blockiert, verändert sich plötzlich die Winkelgeschwindigkeit der Ausgangswelle des Getriebes 15. Der die Winkelgeschwindigkeit messende Signalgeber 1 informiert die elektronische Steuereinheit 2 fortlaufend über die Winkelgeschwindigkeit der Ausgangswelle des Getriebes 15; derart wird die die Winkelgeschwindigkeitsänderung bewertende Untereinheit 3 die plötzliche Veränderung der Winkelgeschwindigkeit bewerten und die elektronische Steuereinheit 2 gibt über ihre ein Steuersignal erzeugende Untereinheit 4 dem elektrohydraulischen Ventilsystem 5 einen Befehl zum Bremsen des Bremsmoments. Dieser Befehl bleibt solange aufrecht wie das Rad schleudert.

Das erfindungsgemäße Verfahren und die Einrichtung sind über das seitens des Fahrzeugfahrers entschiedene Bremsen hinaus auch zum automatischen Bremsen fähig. Ein derartiger Fall kann z.B. vorkommen, wenn der Fahrer das Gas beim Fahren eines Gefälles hinab bereits zurückgenommen hat und das Kraftfahrzeug sich dennoch beschleunigt. In diesem Fall stellt die elektronische Steuereinheit 2 aus der Veränderung des aus dem die Winkelgeschwindigkeit messenden Signalgeber 1 ankommenden Signals mit ihrer die Winkelgeschwindigkeitsänderung bewertenden Untereinheit 3 fest, daß sich das Kraftfahrzeug beschleunigt; weiterhin stellt sie aus dem Signal des Motordrehzahlsignalgebers 7 mit ihrer das Drehzahlgrenzwertsignal erzeugenden Untereinheit 8 fest, daß sich die Drehzahl des Motors 13 über einen vorbestimmten Wert, beispielsweise über die nominelle Motordrehzahl hinaus erhöht hat. Wenn der Gaspedalgrundstellungs-Signalgeber 7 ein der Grundstellung entsprechendes Signal erzeugt, bewertet die die Verzögerung bewertende Untereinheit 10 die Signale derart, daß sich das Kraftfahrzeug trotz des Willens des Fahrzeugfahrers beschleunigt und die Beschleunigung den kritischen Wert erreicht hat. In diesem Fall gibt die ein Steuersignal erzeugende Untereinheit 4 dem elektrohydraulischen Ventilsystem 5 einen Befehl zur Einschaltung der hydrodynamischen Verzögerungsbremse 6. Diese Einschaltung erfolgt vom die Bremskraft wahrnehmenden Signalgeber 11 unabhängig und automatisch. Der blockierungsverhindernde Teil kann selbstverständlich ebenso funktionieren wie beim normalen Bremsen.

Die oben beschriebenen Aufgaben werden von der elektronischen Steuereinheit nach Fig. 6 wie folgt durchgeführt.

12

0241872

Die von dem die Winkelgeschwindigkeit messenden Signalgeber 1, dem Motordrehzahlsignalgeber 7, dem Gaspedalgrundstellungs-Signalgeber 9 und dem die Bremskraft wahrnehmenden Signalgeber 11 ankommenden Signale werden von der programmierbaren Dreikanalzähler- und -zeitgebereinheit IC3 und IC4 empfangen. Hier entstehen verwendbare Signale für die elektronische Steuereinheit 2 mit Hilfe der Signale des Taktgenerators IC7.

Die programmierbare Dreikanalzähler- und -zeitgebereinheiten IC3 und IC4 leiten die Signale in die RAM Einheit IC5 weiter. Die RAM Einheit IC5 speichert die Signale für 2,3 sec. Dieser experimentell ermittelte Wert ist aber nur für die dargestellte Einrichtung gültig. Im Interesse der Vergleichbarkeit der Signale ist es zweckmäßig, diese für etwa die angegebene Zeit zu speichern.

Die ROM Einheit IC6 speichert das Programm für den Mikroprozessor IC1, weiterhin die für das Kraftfahrzeug charakteristischen konstanten Werte, wie z.B. das Übertragungsverhältnis zwischen den über den die Winkelgeschwindigkeit messenden Signalgeber 1 oder den Motordrehzahlsignalgeber 7 an den Meßstellen gemessenen Werten und der tatsächlich wahrzunehmenden Drehzahl (Winkelgeschwindigkeit), oder die zur Bewertung der Überschwingung des Motordrehzahlgrenzwertes nötige nominelle Motordrehzahl.

Der Mikroprozessor IC1 führt die bekanntgemachten Bewertungen aufgrund der Daten des Programms der ROM Einheit IC6 und der RAM Einheit IC5 durch und gibt die Steuersignale an das elektrohydraulische Ventilsystem 5 über die programmierbare Eingangs/Ausgangseinheit IC2 und den Digital/Analogen Wandler D/A.

Die elektronische Steuereinheit 2 bewertet die ankommenden Signale in einer Periode von 100 msec auf das Schleudern des Rades derart, daß eine plötzliche Veränderung bewertet wird, wenn der Unterschied zwischen zwei aufeinander folgenden Messungen der Winkelgeschwindigkeitsänderungen mindestens 40% beträgt.

Die Kraftfahrzeugbeschleunigung gegen den Willen des Fahrzeugfahrers kann nur während einer relativ längeren Zeit bewertet werden; deshalb genügt es, die gefährliche Erhöhung der Motordrehzahl je 400 ms zu kontollieren.

Wie bereits darauf hingewiesen, können die erfindungsgemäßen Einrichtungen auch selbständig und in verschiedenen Varianten zusammengebaut verwendet werden. Die folgenden Varianten sind möglich:

a./ R + KK + BG

b./ R + AB und beliebig KK

c./ R + FK

d./ R + BG + AB

e./ R + BG + FK

f./ R + BG + AB + FK

wobei

FK - Bremspedal

R - gesteuerte Konstruktionseinheit

AB - automatische Einschaltvorrichtung

BG - blockierungsverhindernde Vorrichtung

KK - Handschalter

bedeuten.

*Patentansprüche*

1. *Verfahren zum blockierungsfreien Betätigen einer mittels eines elektrohydraulischen Ventilsystems (5) geregelten hydrodynamischen Verzögerungsbremse (6) bei Kraftfahrzeugen, deren Antriebskette aus einer Brennskrafmaschine (13), einem daran über eine Kupplung (14) angeschlossenen Getriebe (15), mindestens einem daran unmittelbar oder gegebenenfalls über eine Kardanwelle (16) angeschlossenen Differentialwerk (17), mindestens einem daran angeschlossenen Halbwellenpaar (18) und einem daran angeschlossenen Radpaar (19) besteht, dadurch gekennzeichnet, daß aus der Winkelgeschwindigkeit irgendeines Konstruktionsteils oder Konstruktionsteilpaars des mit der Antriebswelle des Getriebes (15) beginnenden und mit den Rädern (19) endenden Teils der Antriebskette mittels eines die Winkelgeschwindigkeit messenden Signalgebers (1) ein elektrisches Signal erzeugt wird, mit der plötzlichen Veränderung des Signals infolge der plötzlichen Verminderung der Winkelgeschwindigkeit des Rades (19) das Steuersignal des elektrohydraulischen Ventilsystems (5) der hydrodynamischen Verzögerungsbremse (6) mittels einer elektronischen Steuereinheit (2) verändert wird und die hydrodynamische Verzögerungsbremse (6) von dem elektrohydraulischen Ventilsystems (2) der blockierungsfreien Verzögerung entsprechend eingestellt wird.*

2. *Einrichtung zur blockierungsfreien Betätigung einer mittels eines elektrohydraulischen Ventilsystems (5) geregelten hydrodynamischen Verzögerungsbremse (6) vorzugsweise nach dem Verfahren nach Anspruch 1, bei Kraftfahrzeugen, deren Antriebskette aus einer Brennkraftmaschine (13), einem daran über eine Kupplung (14) angeschlossenen Getriebe (15), mindestens einem daran unmittelbar oder gegebenenfalls über eine Kardanwelle (16) angeschlossenen Differentialwerk (17), mindestens einem daran angeschlossenen Halbwellenpaar (18) und einem daran angeschlossenen Radpaar (19) besteht, dadurch gekennzeichnet, daß irgendein Konstruktionsteil oder Konstruk-*

0241872

tionsteilpaar des mit der Antriebswelle des Getriebes (15) beginnenden und mit dem Rad (19) endenden Teils des Antriebskette einen die Winkelgeschwindigkeit messenden Signalgeber (1) aufweist, dessen Ausgang an einer elektronischen Steuereinheit (2) angeschlossen ist, welche aus mindestens einer die Winkelgeschwindigkeitsänderung bewertenden Untereinheit (3) und einer damit in Regelungsverbindung stehenden, ein Steuersingal erzeugenden Untereinheit (4) besteht, und daß der Ausgang der elektronischen Steuereinheit (2) mit den elektrischen Reglerarmaturen des elektrohydraulischen Ventilsystems (5) verbunden ist.

3. Einrichtung zur automatischen Einschaltung der mittels eines elektrohydraulischen Ventilsystems (5) geregelten hydrodynamischen Verzögerungsbremse (6) bei Kraftfahrzeugen, die eine Brennkraftmaschine (13), ein den Motor mit Kraftstoff versorgendes Gaszuführsystem (20) und ein das Gaszuführsysten regelndes Gaspedal (21) aufweisen, dadurch gekennzeichnet, daß das Gaszuführsystem (20) mit einem Gaspedalgrundstellungs-Signalgeber (9) und der Motor (13) mit einem Motordrehzahlsignalgeber (7) versehen sind, der Gaspedalgrundstellungs-Signalgeber (9) und der Motordrehzahlsignalgeber (7) am Eingang einer elektronsichen Steuereinheit (29) angeschlossen sind, die mindestens aus einer ein Drehzahlgrenzwertsignal erzeugenden Untereinheit (8), einer damit verbundenen, aus der gemeinsamen Anwesenheit des Drehzahlgrenzwertsignals und des Gaspedalgrundstellungssignals die Verzögerung bewertenden Untereinheit (10), weiterhin einer, mit der die Verzögerung bewertenden Untereinheit (10) in Regelungsverbindung stehenden, ein Steuersignal erzeugenden Untereinheit (4) besteht, und daß der Ausgang der elektronischen Steuereinheit (2) mit den elektrischen Reglerarmaturen des die hydrodynamischen Verzögerungsbremse (6) regelnden elektrohydraulischen Ventilsystems (5) verbunden ist.

4. Einrichtung zur Betätigung der mittels eines elektrohydraulischen Ventilsystems (5) geregelten hydrodynamischen Verzögerungsbremse (6) gemeinsam mit dem Betriebsbremssystem bei Kraftfahrzeugen, deren Bertiebsbremssysteme aus einem Bremspedal (22), auf die Räder (19) einwirkenden Bremskonstruktionen (23) und einer das Bremspedal (22) mit den Bremskonstruktionen (23) verbindenden Bremskraftübertragungskonstruktion (24) besteht, dadurch gekennzeichnet, daß im Betriebsbremssystem ein die Bremskraft wahrnehmender Signalgeber (11) eingebaut ist, welcher mit einem elektrischen Signalumformer (12) verbunden ist, und daß der Ausgang des Signalumformers (12) mit den elektrischen Reglerarmaturen des elektrohydraulischen Ventilsystems (5) verbunden ist.

5. Einrichtung nach Anspruch 2 oder 3, dadurch gekennzeichnet, daß in der elektronischen Steuereinheit die die blockierungsfreie Betätigung regelnden Untereinheiten (BG) und die die automatische Einschaltung der hydrodynamischen Verzögerungsbremse regelnden Untereinheiten (AB) gemeinsam eingebaut sind.

Fig.1

Fig.2

Fig. 3

Fig.4

Fig.5

Fig. 6

Europäisches
Patentamt

**EUROPÄISCHER RECHERCHENBERICHT**

0241872
Nummer der Anmeldung

EP 87 10 5316

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| X | GB-A-2 057 611 (BOSCH)<br>* ganzes Dokument *<br><br>--- | 1,2 | B 60 T 10/02<br>B 60 T 7/12<br>B 60 T 1/08 |
| A | FR-A-2 183 614 (WESTINGHOUSE)<br>* Anspruch 1 *<br><br>--- | 1,2,4 | |
| A | DE-A-2 235 003 (KLAUE)<br>* Ansprüche 1, 2 *<br><br>--- | 1,2,4 | |
| Y | GB-A-1 382 439 (DAIMLER-BENZ)<br>* ganzes Dokument *<br><br>--- | 3 | |
| Y | EP-A-0 036 753 (OGDEN ELECTRONICS)<br>* Anspruch 1 *<br><br>--- | 3 | RECHERCHIERTE SACHGEBIETE (Int. Cl.4) |
| A | FR-A-2 424 827 (WABCO FAHRZEUGBREMSEN)<br>* Ansprüche 1, 8 *<br><br>--- | 3,5 | F 16 D 57/00<br>B 60 T 7/00<br>B 60 T 1/00<br>B 60 K 41/00 |
| A | EP-A-0 145 374 (AE)<br>* Zusammenfassung; Figur 1 *<br><br>----- | 3 | |

Der vorliegende Recherchenbericht wurde für alle Patentansprüche erstellt.

| Recherchenort | Abschlußdatum der Recherche | Prüfer |
|---|---|---|
| BERLIN | 10-07-1987 | KRIEGER P O |